**Europäisches Patentamt**

**European Patent Office**

**Office européen des brevets**

(19)

(11) **EP 1 552 754 A1**

(12) **EUROPÄISCHE PATENTANMELDUNG**

(43) Veröffentlichungstag:
13.07.2005 Patentblatt 2005/28

(51) Int Cl.7: **A23L 1/01**, A47J 37/12

(21) Anmeldenummer: 05000190.8

(22) Anmeldetag: 07.01.2005

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(30) Priorität: **10.01.2004 DE 102004001525**

(71) Anmelder: **KUKA Roboter GmbH**
**86165 Augsburg (DE)**

(72) Erfinder:
• **Schilling, Ebehard**
**86476 Neuburg (DE)**
• **Müller, Stefan**
**86476 Neuburg (DE)**

(74) Vertreter:
**Lempert, Jost, Dipl.-Phys. Dr. rer.nat. et al**
**Patentanwälte**
**Lichti, Lempert, Lasch, Lenz,**
**Postfach 41 07 60**
**76207 Karlsruhe (DE)**

(54) **Verfahren und Vorrichtung zum Frittieren von Frittiergut**

(57) Ein Verfahren zum Frittieren von Frittiergut in einem Wärmeüberträgerfluid, insbesondere Fett, zeichnet sich dadurch aus, dass das Frittiergut bei sukzessive abnehmender Temperatur des Wärmeüberträgerfluïds gegart wird. Eine zur Durchführung des erfindungsgemäßen Verfahrens geeignete Vorrichtung, bei der das Wärmeüberträgerfluid mittels einer Pumpe in einem Kreislauf geführt und in einem Frittierbehälter mit dem Frittiergut in Kontakt gebracht ist, besitzt erfindungsgemäss eine Abfolge von Frittierkammern zum Garen des Frittiergutes mit jeweils unterschiedlichen Temperaturen des Wärmeüberträgerfluids. Mittels des erfindungsgemäßen Verfahrens bzw. der erfindungsgemäßen Vorrichtung wird ein besonders schonender Garvorgang ermöglicht; insbesondere wird die Bildung von gesundheitsschädlichem Acrylamid auf ein Mindestmaß reduziert.

EP 1 552 754 A1

**Beschreibung**

Die Erfindung betrifft ein Verfahren zum Frittieren von Frittiergut in einem Wärmeüberträgerfluid, insbesondere Fett. Weiterhin betrifft die Erfindung eine Vorrichtung zum Frittieren von Frittiergut in einem Wärmeüberträgerfluid, insbesondere Fett, das mittels einer Heizeinrichtung erwärmbar, mittels einer Pumpe in einem Kreislauf geführt und in einem Frittierbehälter mit dem Frittiergut in Kontakt gebracht ist.

Es gehört zu den seit langem erworbenen Kulturtechniken des Menschen, Speisen zu garen, um die enthaltenen Rohprodukte genießbar und/oder schmackhafter zu machen. Dabei spielen neben hygienischen und sensorischen Gründen auch ernährungsphysiologische Aspekte, wie die Denaturierung von Eiweiß oder das Quellen von Stärke, eine Rolle. Das Backen oder Frittieren mit Fett in einer Pfanne oder Friteuse verbessert den Geschmack von Nahrungsmitteln. Außerdem erfreuen sich beide Garverfahren wegen ihrer Schnelligkeit besonderer Beliebtheit.

Der Frittierprozess wird heutzutage in der Regel unter Verwendung konventioneller Tauchfriteusen durchgeführt, wobei eine geringe Menge Frittiergut in eine verhältnismäßig große Menge heißen Frittierfetts eingetaucht und so frittiert wird. Die genannten Mengenverhältnisse sind einerseits durch den Umstand bedingt, dass ein Absinken der Fetttemperatur beim Einbringen des Frittiergutes zwecks schneller und gleichmäßiger Garung möglichst verhindert werden soll, andererseits soll ein fließender Frittiervorgang erreichbar sein. Aus diesem Grunde sind als Weiterentwicklung insbesondere Kreislauffriteusen bekannt, beispielsweise aus der WO 01/21051 A1. Bei derartigen Friteusen wird Frittierfett in einem Fettreservoir erhitzt und anschließend eine im Verhältnis zur Frittiergutmenge geringe Menge Frittierfett in einen Frittierbehälter eingebracht. Das eingebrachte Frittierfett wird in einer separaten Heizzone mit großer Kontaktfläche extrem schnell, jedoch qualitätsschonend weiter erhitzt und nach Beendigung des Frittiervorgangs über einen Überlauf in das Reservoir zurückgeführt. Während des Frittiervorgangs wird Frittierfett durch das Frittiergut absorbiert, so dass der Verlust durch eine bedarfsabhängige Zuführung von frischem Frittierfett ausgeglichen werden muss.

In letzter Zeit haben eine Vielzahl wissenschaftlicher Studien belegt, dass es bei jeglicher Art von Frittierprozessen zu einer Bildung von Acrylamid kommt, das zum jetzigen Zeitpunkt als für den menschlichen Organismus gesundheitsschädlich klassifiziert ist, da der Stoff als möglicher Krebserreger gilt. Es hat sich weiterhin gezeigt, dass die Bildung von Acrylamid hauptsächlich durch die stoffliche Zusammensetzung des Frittiergutes, die Frittiertemperatur während des Frittierprozesses, die Frittierdauer sowie die Qualität des Frittierfetts beeinflusst wird. Darüber hinaus gilt als wissenschaftlich erwiesen, dass die Bildung von Acrylamid beim Frittieren durch Absenken der Frittiertemperatur, eine möglichst kurze Frittierdauer und eine veränderte Zusammensetzung der verwendeten Frittierfette verringert werden kann.

Die vorstehend genannten Faktoren lassen sich bei bekannten Frittierverfahren und -vorrichtungen gar nicht oder nur in unzureichendem Maße beeinflussen, so dass derartige Verfahren mit einem erhöhtem Risiko einer gesundheitlichen Beeinträchtigung durch Acrylamid bei Verzehr von derartig zubereiteten Nahrungsmitteln verbunden sind.

Der Erfindung liegt die Aufgabe zugrunde, ein Verfahren und eine Vorrichtung der eingangs genannten Art dahingehend weiterzuentwickeln, dass ein Acrylamidgehalt des Frittiergutes möglichst niedrig gehalten wird.

Die Aufgabe wird bei einem Verfahren der eingangs genannten Art dadurch gelöst, dass das Frittiergut bei sukzessive abnehmender Temperatur des Wärmeüberträgerfluids gegart wird.

Bei einer Vorrichtung der eingangs genannten Art ist zur Lösung der Aufgabe vorgesehen, dass zum Garen des Frittiergutes eine Abfolge von Frittierkammern mit unterschiedlichen Temperaturen des Wärmeüberträgerfluids vorgesehen ist.

Auf diese Weise lassen sich erfindungsgemäß Frittiertemperaturen und Verweildauern des Frittiergutes in dem Wärmeüberträgerfluid, insbesondere Fett, in einfacher, flexibler und zuverlässiger Weise steuern, so dass eine erhebliche Reduzierung des Acrylamidgehalts im gegarten Nahrungsmittel erzielbar ist.

Nach einer bevorzugten Weiterbildung des erfindungsgemäßen Verfahrens ist vorgesehen, das die Temperatur zu Beginn des Garvorgangs bei ≥ 170°C, vorzugsweise 185°C, liegt. Durch eine erhöhte Temperatur zu Beginn des Frittiervorgangs ergibt sich eine verbesserte Verkrustung von Poren an der Oberfläche des Frittiergutes, was zu einer verringerten Verdampfung der im Frittiergut enthaltenen Feuchtigkeit führt. Dies ist insbesondere hinsichtlich der Bildung von Acrylamid vorteilhaft, da wissenschaftliche Studien belegen, dass ein erhöhter Feuchtigkeitsgehalt des Nahrungsmittels mit einer verringerten Neigung zur Bildung von Acrylamid einhergeht.

Darüber hinaus ist in Weiterbildung des erfindungsgemäßen Verfahrens vorgesehen, dass die Temperatur am Ende des Garvorgangs bei < 170°C liegt. Eine Temperatur von 170°C kann wissenschaftlichen Studien zufolge, insbesondere bei der Zubereitung von Kartoffeln durch Frittieren (Pommes Frites), als kritische Temperatur hinsichtlich der Bildung von Acrylamid angesehen werden. Daher wird durch Garen bei Temperaturen unterhalb dieser kritischen Temperatur von 170°C für eine weitere Reduzierung des Acrylamidgehalts gesorgt.

Erfindungsgemäß kann weiterhin vorgesehen sein, dass das Frittiergut ausgehend von einer ersten Frittierkammer sukzessiver eine Anzahl von Frittierkammern durchläuft, in denen jeweils eine gegenüber der vorangehenden Frittierkammer verminderte Temperatur des Wärmeüberträgerfluids herrscht. Somit lässt sich in einfacher Weise eine zeitlich abnehmende Frittiertemperatur erreichen.

Zweckmäßigerweise wird das Wärmeüberträgerfluid erfindungsgemäß durch ein Pumpmittel in einem Kreislauf geführt, wobei es vorzugsweise durch eine Heizeinrichtung erwärmt und anschließend der ersten Frittierkammer zugeführt wird. Dabei erfolgt die Erwärmung des Wärmeüberträgerfluids in einer bevorzugten Weiterbildung des erfindungsgemäßen Verfahrens in Abhängigkeit von Parametern des in den Frittierkammern befindlichen Frittiergutes, insbesondere einer Masse und/oder einem Feuchtigkeitsgehalt des Frittiergutes in der ersten Frittierkammer. Vor allem die Masse und der Feuchtigkeitsgehalt (Wasseranteil) des Frittiergutes sind beim Einbringen desselben in das Wärmeüberträgerfluid dafür verantwortlich, dass dessen Temperatur absinkt, da eine bestimmte Wärmemenge zum Erwärmen des Frittiergutes und insbesondere zum Verdampfen von in dem Frittiergut enthaltener Flüssigkeit (Wasser) benötigt wird. Um ein gesundheitlich im wesentlichen unbedenkliches Garen des Frittiergutes zu ermöglichen, ist demnach im Zuge einer bevorzugten Weiterbildung des erfindungsgemäßen Verfahrens vorgesehen, dass die Erwärmung des Wärmeüberträgerfluids derart erfolgt, dass in den auf die erste Frittierkammer folgenden Frittierkammern eine Temperatur des Wärmeüberträgerfluids von im Wesentlichen 170°C und darunter herrscht.

Da - wie bereits erwähnt - auch die Qualität des Wärmeüberträgerfluids maßgeblich für ein Entstehen oder Nichtentstehen von Acrylamid während des Frittierprozesses ist, kann erfindungsgemäß weiterhin vorgesehen sein, dass das Wärmeüberträgerfluid nach Durchströmen der Frittierkammern gefiltert wird. Weiterhin können auch Qualitätsmerkmale des Wärmeüberträgerfluids, wie Strahlungsabsorptionsverhalten, Viskosität oder dergleichen, kontinuierlich sensorisch erfasst werden, wobei vorzugsweise in Abhängigkeit von den Sensormesswerten entweder das erfindungsgemäße Verfahren fortgesetzt wird, das Wärmeüberträgerfluid ganz oder teilweise ausgetauscht wird, das Wärmeüberträgerfluid mit Zusatzstoffen versehen wird oder das Verfahren unterbrochen wird. Auf diese Weise lässt sich sicherstellen, dass zu keiner Zeit der Garvorgang mit einem Wärmeüberträgerfluid minderer Qualität durchgeführt bzw. fortgesetzt wird, so dass auch auf diese Weise die Bildung von Acrylamid wirksam reduzierbar ist.

In Weiterbildung einer erfindungsgemäßen Vorrichtung ist vorgesehen, dass die Frittierkammern in Reihe hintereinander angeordnet sind, so dass das Frittiergut aus einer Frittierkammer in eine benachbarte Frittierkammer mit niedriger Temperatur des Wärmeüberträgerfluids überführbar ist. Somit lässt sich das im Zuge eines erfindungsgemäßen Verfahrens vorgeschlagene Garen bei sukzessive abnehmender Temperatur in konstruktiv einfacher Weise technisch realisieren.

Zweckmäßig sind die Frittierkammern durch Aufnahmemittel für das Frittiergut gebildet. Die Aufnahmemittel können korbartig ausgebildet sein und weisen vorzugsweise wenigstens eine für eine Strömung des Wärmeüberträgerfluids im Wesentlichen undurchlässige Wandung auf. Zusätzlich oder alternativ kann auch vorgesehen sein, dass zwischen den Aufnahmemitteln jeweils eine für eine Strömung des Wärmeüberträgerfluids im Wesentlichen undurchlässige Wand in dem Frittierbehälter angeordnet ist. Mittels der genannten undurchlässigen Wände und/oder Wandungen lässt sich die Strömung des Wärmeüberträgerfluids derartig beeinflussen, dass das Frittiergut in jeder Frittierkammer in optimaler Weise mit dem Wärmeüberträgerfluid in Kontakt gebracht, vorzugsweise von diesem druchströmt wird, um eine Beschleunigung des Garprozesses und damit verbunden eine verminderte Bildung von Acrylamid zu erreichen.

Eine äußerst bevorzugte Weiterbildung der erfindungsgemäßen Vorrichtung sieht vor, dass die Aufnahmemittel zum Überführen des Frittiergutes kippbar gelagert sind, wobei zum Kippen insbesondere eine drehbare Lagerung um eine Achse vorgesehen ist. Die Überführung des Frittiergutes von einer Frittierkammer in die nächste erfolgt entsprechend in einfacher Weise durch Kippen der Aufnahmemittel, was manuell oder automatisch geschehen kann.

Der Frittierbehälter einer erfindungsgemäßen Vorrichtung kann im Bereich der ersten Frittierkammer einen Einlass und im Bereich der letzten Frittierkammer einen Auslass für das Wärmeüberträgerfluid aufweisen. Zumindest im Einlassbereich des Frittierbehälters kann darüber hinaus ein Temperatursensor vorgesehen sein, so dass eine Einlasstemperatur des Wärmeüberträgerfluids in Abhängigkeit von zumindest einem Messsignal des Temperatursensors regelbar ist. Auf diese Weise ist dafür gesorgt, dass in dem Frittierbehälter, d.h. in den einzelnen Frittierkammern jederzeit das vorstehend skizzierte Temperaturprofil von etwa 185°C abnehmend bis auf einen Wert $\leq 170°C$ erreichbar ist.

Zur Feinregulierung der Einlasstemperatur kann die erfindungsgemäße Vorrichtung in Weiterbildung eine zusätzliche Heizeinrichtung aufweisen. Dem gleichen Zweck dient alternativ oder zusätzlich eine Mischvorrichtung zum Mischen von Mengen des Wärmeüberträgerfluids mit unterschiedlichen Temperaturen vor einem Einströmen des Wärmeüberträgerfluids in den Frittierbehälter.

Um das Wärmeüberträgerfluid vollständig aus dem Frittierbehälter entfernen zu können, beispielsweise zu Reinigungszwecken, besitzt eine erfindungsgemäße Vorrichtung gemäß einer weiteren Ausgestaltung ein Reservoir für das Wärmeüberträgerfluid aus dem Frittierbehälter. In diesem kann zum Bestimmen von Qualitätsmerkmalen des Wärmeüberträgerfluids, wie Strahlungsabsorptionsverhalten, Viskosität oder dergleichen, eine Sensoreinrichtung angeordnet sein. Weiterhin weist eine erfindungsgemäße Vorrichtung zum Erhalten der Qualität des Wärmeüberträgerfluids durch Entfernen von Schwebstoffen, vorzugsweise eine Filtereinrichtung für das Wärmeüberträgerfluid auf. Aus demselben Grunde können auch Zuführeinrichtungen für Austausch-Wärmeüberträgerfluid und/oder Zusatzstoffe vorhanden sein, die in bevorzugter Ausgestaltung jeweils einen Behälter für das zuzuführende Medium sowie ein Pumpmittel aufweisen.

Weitere Eigenschaften und Vorteile der Erfindung ergeben sich aus der nachfolgenden Beschreibung von Ausführungsbeispielen anhand der Zeichnung. Es zeigt:

Fig. 1    eine schematische Darstellung einer ersten Ausgestaltung der erfindungsgemäßen Vorrichtung;

Fig. 2    ein Temperaturprofil des Wärmeüberträgerfluids in einer erfindungsgemäßen Vorrichtung;

Fig. 3    eine weitere Ausgestaltung der erfindungsgemäßen Vorrichtung in schematischer Darstellung; und

Fig. 4    eine dritte Ausgestaltung der erfindungsgemäßen Vorrichtung, ebenfalls in schematischer Darstellung.

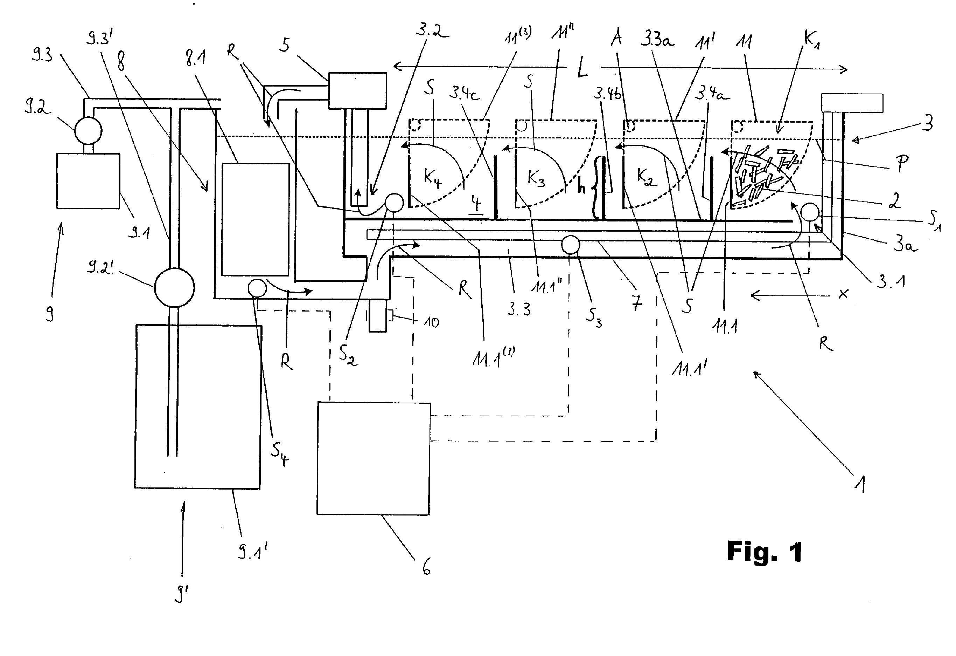

Die Fig. 1 zeigt in einer schematischen Darstellung eine erste Ausgestaltung der erfindungsgemäßen Vorrichtung 1 zum Frittieren von Frittiergut 2, beispielsweise Pommes Frites, die in Fig. 1 aus Gründen der Übersichtlichkeit nur exemplarisch dargestellt sind.

Die erfindungsgemäße Vorrichtung 1 weist zunächst einen Frittierbehälter 3 auf, der zum Garen des Frittiergutes 2 mit einem Wärmeüberträgerfluid 4, hier Frittierfett, gefüllt ist. Der Füllstand des Frittierbehälters 3 ist durch eine gestrichelte (Pegel-)Linie P markiert. Der Frittierbehälter 3 weist einen Einlass 3.1 und einen Auslass 3.2 für das Wärmeüberträgerfluid 4 auf, das über eine Ölpumpe 5 im Bereich des Auslasses 3.2 in einem Kreislauf (Pfeile R) durch den Frittierbehälter 3 gefördert wird. Im Einlassbereich 3.1 und im Auslassbereich 3.2 des Frittierbehälters 3 sind Temperatursensoren $S_1$, $S_2$ zum Bestimmen einer Temperatur $\vartheta_E$, $\vartheta_A$ des Wärmeüberträgerfluids 4 angeordnet, die über gestrichelt gezeichnete Leitungen mit einer Steuerungseinrichtung 6 der Vorrichtung 1 verbunden sind.

Dem Einlass 3.1 des Frittierbehälters 3 vorgeschaltet befindet sich eine ebenfalls von dem Wärmeüberträgerfluid 4 durchströmbare, durch eine Schottwand 3.3a von dem eigentlichen Frittierbehälter getrennte Heizkammer 3.3, in der eine Heizeinrichtung 7 für das Wärmeüberträgerfluid 4, hier ein Rohrheizkörper, angeordnet ist, der beispielsweise innerhalb eines Mantelrohres eine Reihe von PTC-Widerstandsheizelementen (nicht gezeigt) aufweisen kann. Weiterhin ist in der Heizkammer 3.3 ein weiterer Temperatursensor $S_3$ zum Bestimmen der Temperatur des Wärmeüberträgerfluids 4 angeordnet, der ebenfalls in Wirkverbindung mit der Steuerungseinrichtung 6 steht (gestrichelte Linie).

Darüber hinaus weist die erfindungsgemäße Vorrichtung 1 gemäß der Fig. 1 außerhalb des Fritterbehälters 3 eine Filtereinrichtung 8 für das Wärmeüberträgerfluid auf, die ein Filterelement 8.1 für das Wärmeüberträgerfluid sowie einen Sensor $S_4$ zum Überwachen von Qualitätsparametern des Wärmeüberträgerfluids 4, wie Dielektrizitätskonstante, Strahlungsabsorptionsverhalten (Trübung), Viskosität oder dergleichen, beinhaltet. In Verbindung mit der Filtereinrichtung 8 weist die erfindungsgemäße Vorrichtung Zuführeinrichtungen 9, 9' für Zusatzstoffe (Additive) bzw. Austausch-Wärmeüberträgerfluid auf. Diese besitzen jeweils einen Vorratsbehälter 9.1, 9.1' für die Zusatzstoffe bzw. das Austauschfluid sowie zum Fördern des jeweils zuzuführenden Mediums ein geeignetes Pumpmittel 9.2, 9.2'. Das Zuführen erfolgt über (teilweise gemeinsame) Zuleitungen 9.3, 9.3'.

In einem Bereich zwischen der Filtereinrichtung 8 und dem Frittierbehälter 3 bzw. der Heizkammer 3.3 weist die erfindungsgemäße Vorrichtung 1 eine Ablasseinrichtung 10 für das Wärmeüberträgerfluid 4 auf.

Wie für die Sensoren $S_1$-$S_4$ explizit gezeigt, stehen auch alle weiteren mechanisch und/oder elektrisch betätigbaren Bestandteile der erfindungsgemäßen Vorrichtung, d.h. die Pumpe 5, der Rohrheizkörper 7, die Pumpmittel 9.2, 9.2' sowie die Ablasseinrichtung 10 über entsprechende Verbindungen mit der Steuerungseinrichtung 6 der erfindungsgemäßen Vorrichtung 1 in Verbindung, was jedoch aus Gründen der Übersichtlichkeit in der Fig. 1 nicht dargestellt ist. Auf diese Weise ist die Steuerungseinrichtung 6 zu einer umfassenden Steuerung der erfindungsgemäßen Vorrichtung 1 in der Lage.

Innerhalb des Frittierbehälters 3 der erfindungsgemäßen Vorrichtung 1 sind eine Reihe von Frittierkammern $K_1$-$K_4$ ausgebildet. Allgemein kann eine Anzahl von n Frittierkammern $K_n$ vorgesehen sein. Zum Schaffen der Frittierkammern $K_1$-$K_4$ sind innerhalb des Frittierbehälters 3 eine Reihe von vertikalen Trennwänden 3.4a, 3.4b, 3.4c vorgesehen, deren vertikale Erstreckung h unterhalb des Pegels P des Wärmeüberträgerfluids 4 im Frittierbehälter 3 endet. In den Frittierkammern $K_1$-$K_4$ sind Aufnahmemittel 11, 11', 11'', $11^{(3)}$ in Form von Frittierkörben angeordnet. Die Frittierkörbe weisen im Querschnitt eine im Wesentlichen kreissegmentartige Form auf, die im gezeigten Äusführungsbeispiel insbesondere einem Viertelkreis entspricht. Die Frittierkörbe $11$-$11^{(3)}$ sind im Wesentlichen für das Wärmeüberträgerfluid 4 durchlässig ausgebildet, wie anhand der gestrichelten Begrenzungslinien der Frittierkörbe und der Pfeile S angedeutet ist, wobei Letztere die Strömungsrichtung des Wärmeüberträgerfluids 4 innerhalb der Frittierkammern $K_1$-$K_4$ und damit durch die Frittierkörbe $11$-$11^{(3)}$ bzw. das Frittiergut 2 angeben. In ihrem unteren, bezogen auf die Strömung S hinteren Bereich weisen die Aufnahmemittel $11$-$11^{(3)}$ eine für das Wärmeüberträgerfluid 4 im Wesentlichen undurchlässige Wand 11.1, 11.1', 11.1'', 11.1$^{(3)}$ auf, die gemeinsam mit den bereits beschriebenen Trennwänden 3.4a-c für eine definierte Strömung S in den Frittierkammern $K_1$-$K_4$ sorgt. Dabei wird aus der zeichnerischen Darstellung deutlich, dass das gezeigte Strömungsverhalten S in ähnlicher alternativ auch ohne die Trennwände 3.4a-c erreichbar ist, so dass diese im Zuge einer alternativen Ausgestaltung der erfindungsgemäßen Vorrichtung 1 entfallen können, wobei ihre Aufgabe allein durch die undurchlässige Wand 11.1-11.1$^{(3)}$ der Frittierkörbe übernommen wird.

Die Aufnahmemittel 11-11$^{(3)}$ sind in ihrem hinteren, oberen Bereich um eine parallel zur Oberfläche O des Wärmeüberträgerfluids 4 im Frittierbehälter 3 verlaufende Achse A im Wesentlichen in Richtung der Strömungsschleife S schwenk- bzw. kippbar; die Achse A ist aus Gründen der Übersichtlichkeit nur für das Aufnahmemittel 11' in der Frittierkammer $K_2$ explizit bezeichnet, jedoch identisch auch in jeder der anderen Frittierkammern $K_1$, $K_3$, $K_4$ enthalten. Gegebenenfalls vorhandene Antriebsmittel (nicht gezeigt) zum Kippen der Aufnahmemittel 11-11$^{(3)}$ um die Achsen A sind ebenfalls mit der Steuerungseinrichtung 6 der Vorrichtung 1 verbunden und somit durch diese steuerbar.

Eine Erstreckungsrichtung des Frittierbehälters 3 ist in Fig. 1 mit "x" bezeichnet; eine Länge des Frittierbehälters 3 zwischen dessen Wandung 3a im Eingangsbereich 3.1 und einer Position des Temperatursensors $S_2$ im Auslassbereich 3.2 ist in Fig. 1 mit "L" bezeichnet.

Das erfindungsgemäße Frittierverfahren läuft unter Verwendung der in Fig. 1 dargestellten Frittiervorrichtung folgendermaßen ab: In der Heizkammer 3.3 strömt das Wärmeüberträgerfluid 4 (Frittierfett) am Rohrheizkörper 7 vorbei, wird durch diesen auf eine Temperatur > 170°C, vorzugsweise etwa 185°C, erhitzt und strömt anschließend durch den Einlass 3.1 am Temperatursensor $S_1$ vorbei in die erste Frittierkammer $K_1$, die im Aufnahmemittel 11 frisches Frittiergut 2 enthält. Die Heizkammer 3.3 dient hierbei gleichzeitig als (Wärme-)Energiespeicher. In der Frittierkammer $K_1$ wird das Frittiergut 2 von dem heißen Frittierfett durchströmt, und der Garvorgang beginnt. Die in der Frittierkammer $K_1$ erforderliche Temperatur des Frittierfetts richtet sich nach der Energiemenge, die zum Aufheizen des Frittiergutes 2 erforderlich ist. Diese Energiemenge hängt von der eingebrachten Frittiergutmenge sowie weiteren Parametern des Frittiergutes 2, wie dessen Wassergehalt, ab. Die optimale Temperatur ist experimentell zu ermitteln. Die erhöhte Fetttemperatur in der ersten Frittierkammer $K_1$ dient neben einer schnellen Erwärmung des Frittiergutes 2 insbesondere zu einem effizienten Verschließen von Poren an der Frittiergutoberfläche durch Verkrusten, wodurch der eine Bildung von Acrylamid begünstigende Feuchtigkeitsverlust des Frittiergutes 2 wenigstens teilweise vermieden wird.

Die Temperatur des Frittierfetts nimmt in Erstreckungsrichtung x des Frittierbehälters 3 aufgrund von Wärmeverlusten an das Frittiergut 2 und die Umgebung (durch Strahlung, Konvektion und Wärmeleitung) von Kammer zu Kammer kontinuierlich ab, d.h. die Frittierfetttemperatur in Kammer $K_2$ ist größer als diejenige in der Frittierkammer $K_3$, die wiederum oberhalb der Temperatur in der Frittierkammer $K_4$ ($K_n$) liegt, die erfindungsgemäß < 170°C beträgt. Durch Schwenken der Frittierkörbe 11-11$^{(3)}$ um ihre jeweilige Achse A - entweder manuell oder automatisiert über Antriebsmittel und Steuerung - und dadurch bewirktes Weiterkippen des Frittiergutes 2 in das jeweils nachfolgende Aufnahmemittel 11'-11$^{(3)}$ wird so erfindungsgemäß der Garprozess bei sukzessive abnehmender Frittiertemperatur fortgesetzt. Diese wird mittels der Temperatursensoren $S_1$-$S_3$ kontinuierlich erfasst und über eine Regelung der Heizleistung des Rohrheizkörpers 7 so angepasst, dass innerhalb der ersten Frittierkammer $K_1$ die genannte erhöhte Eingangstemperatur und in der letzten Frittierkammer $K_4$ ($K_n$) eine Endtemperatur von < 170°C herrscht. Dementsprechend wird in Abhängigkeit vom Temperaturgefälle des Frittierfetts in dem Frittierbehälter 3 und der eingebrachten Frittiergutmenge 2 die Energiezufuhr durch Heizen geregelt. Zusätzlich kann auch über eine geeignete Regelung der Strömungsgeschwindigkeit des Wärmeüberträgerfluids 4 durch entsprechende Ansteuerung der Pumpe 5 eine weitere Beeinflussung der Energiezufuhr erfolgen.

Die Überführung des Frittiergutes von Kammer zu Kammer durch Kippen der Körbe ist insbesondere bei relativ weichem Frittiergut auch deshalb vorteilhaft, da so das Frittiergut nicht verklebt. Bei relativ festen Frittiergütern ist demgegenüber auch eine stetige Förderung möglich, die hier nicht explizit dargestellt ist.

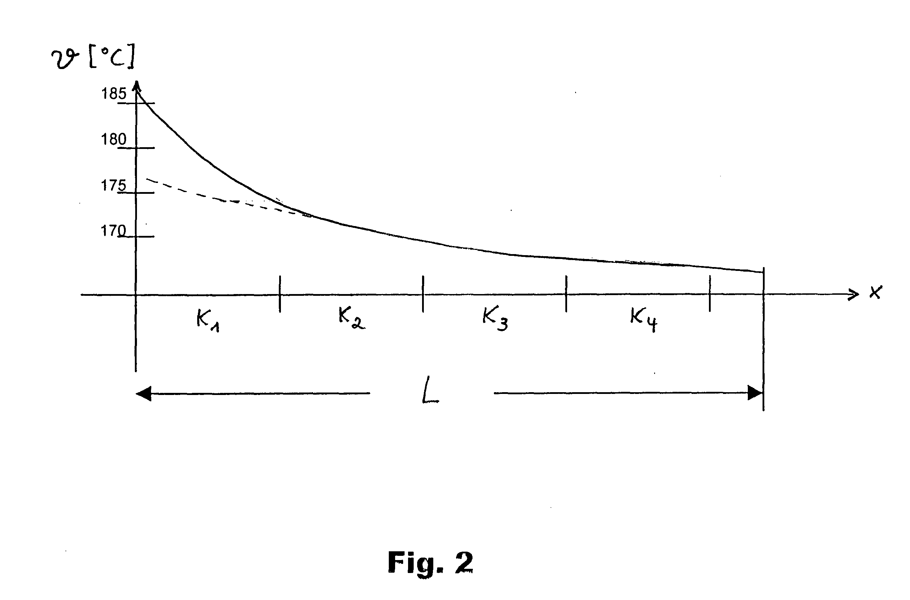

Das vorstehend charakterisierte Temperaturprofil in dem Frittierbehälter 3 ist in Fig. 2 vereinfachend gezeigt. Für die graphische Darstellung der Fig. 2 wurde die Temperatur $\vartheta$ in °C über der Längskoordinate x für die Erstreckung des Frittierbehälters 3 aufgetragen; entlang der x-Achse sind weiterhin die Bereiche der Frittierkammern $K_1$-$K_4$ markiert. Der Anfangspunkt der in Fig. 2 gezeigten Temperaturkurve fällt mit dem Ort des Einlass-Temperatursensors $S_1$, ihr Endpunkt mit dem Ort des Auslass-Temperatursensors $S_2$ zusammen. Aus der graphischen Darstellung ist entnehmbar, dass die Temperatur $\vartheta$ des Frittierfetts in der ersten Frittierkammer $K_1$ aufgrund des Einbringens frischen Frittiergutes stark abnimmt und anschließend hin zu größeren x-Werten in den Kammern $K_2$-$K_4$ weiter, jedoch langsamer zurück geht, bis in der letzten Frittierkammer $K_4$ eine Temperatur $\vartheta$ < 170°C erreicht ist.

Das starke Abnehmen der Fetttemperatur in der Kammer $K_1$ erklärt sich vor allem durch den Feuchtigkeitsverlust des Frittiergutes durch Verdampfen von Wasser beim Erhitzen. Dieser Sachverhalt sei nachfolgend durch ein Rechenbeispiel verdeutlicht:

Masse Frittiergut: $m_F$ = 160 g

Masse Wasseranteil: $m_W$ = 100 g

Masse Rest: $m_R$ = 60 g (Kohlenhydrate, Eiweiß)

spezifische Wärmekapazität Wasser: $c_W$ = 4,2 J/(g·K)

spezifische Wärmekapazität Rest: $c_R \approx$ 1,5 J(g·K)

spezifische Verdampfungsenergie Wasser: $e_V$ = 2260 J/g

Anfangstemperatur Frittiergut: $\vartheta_A$ = 30°C

Endtemperatur Frittiergut: $\vartheta_E$ = 90°C

Die für eine Temperaturänderung eines Körpers mit Masse m und spezifischer Wärmekapazität c um eine Temperaturdifferenz $\Delta\vartheta$ benötigte Wärmeenergie E berechnet sich nach der allgemeinen Formel:

$$E = c \cdot m \cdot \Delta\vartheta,$$

so dass sich unter der Annahme, dass 50% des im Frittiergut enthaltenen Wassers, entsprechend einer Masse $m_W' =$ 50 g, während des Frittierens verdampft, eine zuzuführende Energiemenge von

$$E = c_W \cdot (m_F - m_W') \cdot (\vartheta_A - \vartheta_E) + c_W \cdot m_W' \cdot (100°C - \vartheta_A)$$
$$+ c_R \cdot m_R \cdot (\vartheta_E - \vartheta_A) + e_V \cdot m_W'$$

resultiert.

Nach Einsetzen der angegebenen Zahlenwerte ergibt sich so ein Energiebedarf von E = 145,7 kJ, wovon allein 113 kJ auf die Verdampfungsenergie $E_V = m_W' \cdot e_V$ entfallen, so dass insbesondere die Verdampfung des Wasseranteils des Frittierguts den Energiebedarf bestimmt.

Im Rahmen des erfindungsgemäßen Verfahrens bzw. bei einer erfindungsgemäßen Vorrichtung wird die vorstehend errechnete Energie E dem Wärmeüberträgerfluid entzogen, was in Abhängigkeit von dessen Masse zu einer Absenkung der Temperatur des Wärmeüberträgerfluids führt. Mit $c_{F1}$ = 1,67 J/(g·K) für die spezifische Wärmekapazität des Fluids und nach dem Vorstehenden gilt:

$$\Delta\vartheta = E/(c_{F1} \cdot m_{F1}),$$

so dass sich eine $1/m_{F1}$-Abhängigkeit der Temperaturabnahme $\Delta\vartheta$ von der vorhandenen Fluidmasse ergibt. Die Absenkung $\Delta\vartheta$ der Frittierfetttemperatur verzögert den Garprozess und führt zu einer verstärkten Bildung von Acrylamid, weshalb die entzogenen Energie E durch die erfindungsgemäß geregelte Wärmezufuhr ständig ausgeglichen wird. Nach der Darstellung der Fig. 2 ergibt sich in der Frittierkammer $K_1$ eine Temperaturabnahme $\Delta\vartheta \approx$ 18°C. Nach dem Vorstehenden ergibt sich daraus bei einem Energiebedarf E $\approx$ 146 kJ ein Wert $m_{F1} \approx$ 4,9 kg. Das bedeutet, dass durch das Einbringen von $m_F$ = 160 g Frittiergut etwa 4,9 kg Frittierfett unter den vorstehend gemachten Annahmen um 18°C abgekühlt werden. Die Abkühlung erfolgt dabei zeitlich nicht linear und muss bei angestrebter kleinerer Fluidmasse durch einen Zustrom in geeigneter Weise erhitzten Frittierfetts ausgeglichen werden. Dies wird erfindungsgemäß durch Anpassen der Heizleistung des Rohrheizkörpers 7 und/oder der Pumpleistung der Pumpe 5 durch die Steuerungseinrichtung 6 nach Maßgabe von Temperaturinformationen der Temperatursensoren $S_1$-$S_3$ erreicht.

Allgemein gilt, dass die Energiemenge in Abhängigkeit vom Energiebedarf innerhalb einer bestimmten Zeit zugeführt werden muss, um den Garprozess optimal zu gestalten.

Wenn, wie im obigen Rechenbeispiel, zur Verdampfung der enthaltenen Feuchtigkeit von 160 g Frittiergut 146 kJ benötigt werden, kann man weiter annehmen, dass der Wasseranteil je nach Beschaffenheit des Frittiergutes bereits nach 30-60 s zu 75% verdampft ist und auch der übrige Energiebedarf zu einem Anteil von 75% (110 kJ) benötigt wird.

Es folgt bei einer angenommenen Temperaturdifferenz $\Delta\vartheta$ = 185°C - 170°C = 15°C (entsprechend 15K):

$$m_{F1} = \frac{E}{c_{F1} \cdot \Delta\vartheta} = \frac{110 \text{ kJ}}{1,67 \text{ J/g}\cdot 15 \text{ K}} = 4,4 \text{ kg}.$$

Daraus folgt: In 30 s müssen mindestens 4,4 kg Frittierfett mit 185°C zugeführt werden, damit die Frittiertemperatur im Mittel nicht unter 170°C absinkt.

Die erforderliche Energie von 146 kJ steht bei einer Temperaturdifferenz $\Delta\vartheta$ = 15°C in einer Frittiermenge von etwa 6 kg für die gesamte Backzeit zur Verfügung. Bei einer kontinuierlichen Produktion werden also jeweils ca. 6 kg Frittierfett mit 185°C innerhalb 30 s benötigt, um die Frittiertemperatur von 170°C am Prozessende zu gewährleisten. Die angenommene Backzeit beträgt etwa 120 s; wenn gleichzeitig mehrere Portionen gebacken werden, steigt der Energiebedarf pro Zeiteinheit entsprechend an. Eine Veränderung des Parameters $\Delta\vartheta$ beeinflusst die erforderliche Frittiermenge pro Zeit.

Generell lässt sich festlegen: Bei Frittiergut mit einem Anteil von

33% Kohlehydrate/Eiweiß und

66% Wasser, davon

50% Verdunstanteil,

wird pro Gramm Frittiergut zum Frittieren eine Energiemenge von ungefähr 0,9 kJ benötigt, das entspricht etwa 0,036 kg Frittieröl mit $\Delta\vartheta$ = 15°C.

Damit die Backtemperatur dabei nicht absinkt, wird diese Energie im Rahmen der Erfindung in Abhängigkeit vom augenblicklichen Bedarf innerhalb der festgelegten Backzeit zugeführt.

Die Frittiertemperatur in Kammer $K_1$ sinkt nur dann auf die in der Fig. 2 skizzierte Art und Weise, wenn in der Frittierkammer $K_1$ frisches Frittiergut 2 vorhanden ist. Ist dies nicht der Fall, wird durch die erfindungsgemäße Regelung entsprechend kühleres Wärmeüberträgerfluid 4 in die Kammer $K_1$ eingeleitet (gestrichelte Linie in Fig. 2), so dass sich weiterhin in den nachfolgenden Kammern $K_2$-$K_4$ der gewünschte dargestellte Temperaturverlauf $\vartheta(x)$ ergibt. Die Einlasstemperatur $\vartheta_A$ des Frittierfetts in die Frittierkammer $K_1$ kann erfindungsgemäß auch noch weiter reduziert werden, wenn auch in den nachfolgenden Frittierkammern $K_2$-$K_4$ sukzessive kein Frittiergut 2 mehr enthalten ist, beispielsweise durch Weiterkippen in das jeweils nachfolgende Aufnahmemittel 11'', 11 [3] und Entnahme am Ende des Frittierbehälters 3.

Zur Beurteilung der Qualität des Frittierfetts werden sensorisch mittels des in der Fig. 1 gezeigten Sensors $S_4$ bestimmte Parameter des Frittierfetts gemessen. Dabei kann es sich um die bereits vorstehend genannte Wärmekapazität $c_{F1}$ des Frittierfetts handeln oder um weitere physikalische Parameter, wie die Dielektrizitätskonstante $\varepsilon$, einen Strahlungsabsorptionsgrad als Maß für die Trübung des Frittierfetts und/oder um dessen Viskosität. Der Sensor $S_4$ ist dabei vorzugsweise nicht zum Messen von absoluten Werten ausgebildet, sondern mißt nur relative Werte und muss daher immer mit frischem, zu verwendendem Frittierfett geeicht werden (Sollwert). Die Abweichung des kontinuierlich gemessenen Istwertes vom Sollwert beeinflusst den erfindungsgemäßen Regelvorgang, der darin besteht, dass

a) das erfindungsgemäße Frittierverfahren fortgesetzt wird;

b) eine bestimmte Menge frischen Frittierfetts ergänzt wird;

c) eine Zugabe von Additiven erfolgt; oder

d) der Frittiervorgang abgebrochen wird.

Die erforderlichen Angaben werden vom Sensor $S_4$ ausgegeben und an die Steuerungseinrichtung 6 der Vorrichtung 1 übermittelt. Diese kann anschließend über nicht gezeigte Steuerungsverbindungen entweder die Pumpmittel 9.2, 9.2' zum Zuführen von Additiven bzw. Frischfett ansteuern, oder über eine Ansteuerung der Ablasseinrichtung 10 einen kompletten Wechsel des Wärmeüberträgerfluids 4 einleiten. Zum Unterbrechen des Frittiervorgangs kann mittels geeigneter Steuersignale der Steuerungseinrichtung 6 die Kreislauf-Pumpe 5 gestoppt und der Rohrheizkörper 7 abgeschaltet werden.

In Wirkverbindung mit den Achsen A der Aufnahmemittel 11-11[3] kann die erfindungsgemäße Vorrichtung - wie gesagt - geeignete, nicht gezeigte Antriebsmittel zum automatisierten Verkippen der Aufnahmemittel aufweisen, die vorzugsweise ebenfalls über die Steuerungseinrichtung 6 nach einem vorbestimmten zeitlichen Ablaufschema ansteuerbar sind, so dass der erfindungsgemäße Frittiervorgang möglichst unabhängig von einem Bedienpersonal der Vorrichtung 1 ablaufen kann. Als Additive kommen grundsätzlich alle dem Fachmann insbesondere zur Verbesserung der Wärmeübertragung auf das Frittiergut oder als Stabilisatoren bekannten Zusatzstoffe in Frage, beispielsweise Wasser, Zitronensäure, Ascorbinsäure, Kurkumaöl, Romarinöl und Emulgatoren. Auf eine Verwendung von Silikon (E900) wird mit Blick auf die angesprochene Acrylamid-Problematik jedoch vorzugsweise bewusst verzichtet.

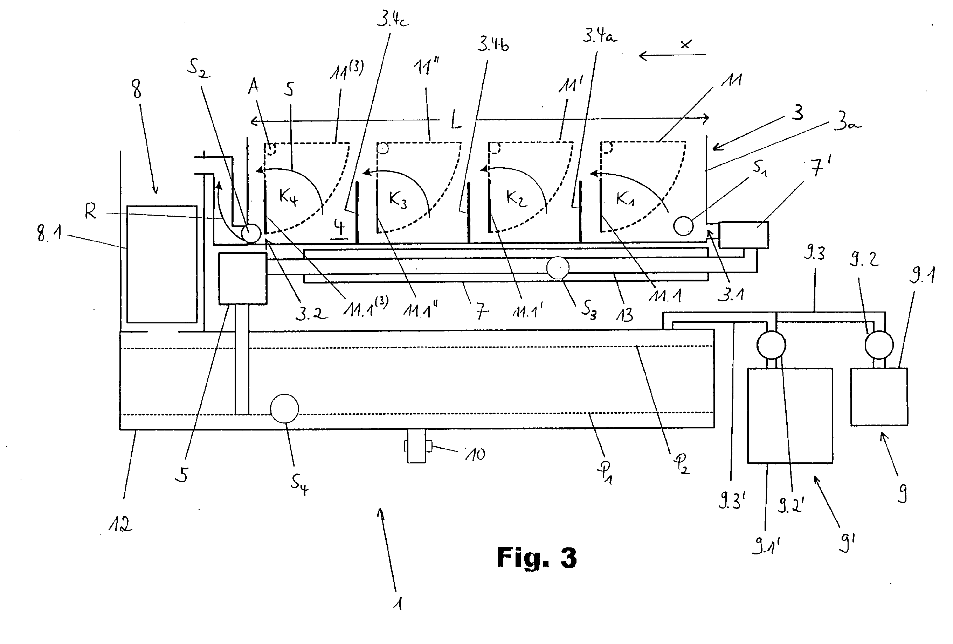

Die Fig. 3 zeigt eine weitere Ausgestaltung der erfindungsgemäßen Frittiervorrichtung 1, die insbesondere in den Grundzügen des erfinderischen Konzepts im Wesentlichen der in Fig. 1 gezeigten und anhand dieser bereits detailliert beschriebenen Frittiervorrichtung entspricht. Demzufolge sind übereinstimmende Bestandteile der Frittiervorrichtung mit denselben Bezugszeichen wie in der Fig. 1 versehen. Es soll hier daher nur auf die wesentlichen Unterschiede gegenüber der in der Fig. 1 gezeigten Ausgestaltung eingegangen werden.

Beim Gegenstand der Fig. 3 ist anstelle der einstückig mit dem Frittierbehälter 3 ausgebildeten Heizkammer 3.3 (Fig. 1) ein separater Tank 12 für das Wärmeüberträgerfluid 4 vorgesehen, der sich in Richtung der Fluidströmung R an die Filtereinrichtung 8 anschließt. Der Tank 12 steht mit den Zuführeinrichtungen 9, 9' für Additive bzw. Austauschfluid in Verbindung. Aus dem Tank 12 wird das Wärmeüberträgerfluid 4 mittels der Pumpe 5 in den Frittierbehälter 3 gefördert. Gemäß der Ausgestaltung der Fig. 3 weist nunmehr der Tank 12 die Sensoreinrichtung $S_4$ sowie die Ablasseinrichtung 10 auf. Gestrichelt eingezeichnet sind innerhalb des Tanks 12 die Pegel des Wärmeüberträgerfluids 4 bei Betrieb der Vorrichtung 1 ($P_1$) und bei Rücklauf $P_2$, d.h. wenn das gesamte Wärmeüberträgerfluid 4 aus dem Frittierbehälter 3 abgelassen wurde.

Die Erwärmung des Wärmeüberträgerfluids 4 erfolgt auf dem Weg in Richtung eines Einlasses 3.1 des Frittierbehälters 3 mittels einer entlang einer Fluidleitung 13 angeordneten und diese ggf. umschließenden Heizeinrichtung 7. Die Heizeinrichtung 7 wird durch eine weitere Heizeinrichtung 7' in unmittelbarer Nähe des Einlasses 3.1 ergänzt, die als dynamische Heizung fungiert und somit eine genauere (Fein-)Dosierung der zugeführten Wärmeenergie ermöglicht.

Insbesondere die genannten Förder- und Heizmittel sind - wie bereits in der Fig. 1 angedeutet - mit einer Steuerungseinrichtung 6 der erfindungsgemäßen Vorrichtung 1 verbunden, die jedoch in der Fig. 3 aus Übersichtlichkeitsgründen nicht erneut explizit dargestellt ist.

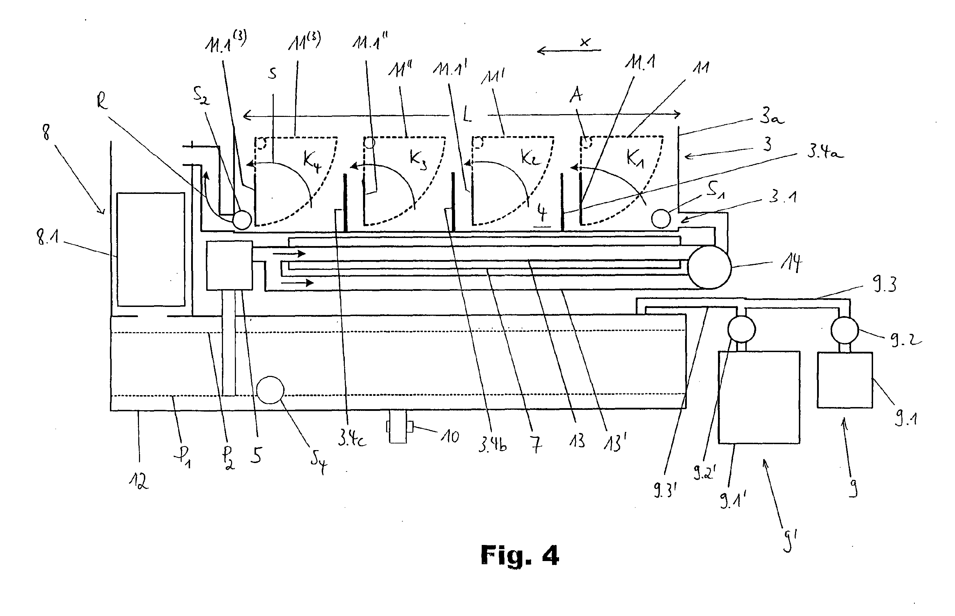

Der Gegenstand der Fig. 4 weist gegenüber der vorstehend anhand der Fig. 3 beschriebenen Ausgestaltung der erfindungsgemäßen Frittiervorrichtung 1 anstelle der zusätzlichen Heizeinrichtung 7' (Fig. 3) eine Mischeinrichtung 14 in Form eins Drei-Wege-Ventils auf. Bei der Ausgestaltung gemäß Fig. 4 ist zusätzlich zu der bereits in Fig. 3 gezeigten Fluidleitung 13 im Bereich der Heizeinrichtung 7 eine zu der Fluidleitung 13 im Wesentlichen parallele Fluidleitung 13' vorgesehen, die jedoch nicht mit der Heizeinrichtung 7 in Kontakt steht, so dass das in ihr geführte Wärmeüberträgerfluid 4 nicht durch die Heizeinrichtung 7 erwärmt wird. Das Drei-Wege-Ventil 14 ist zum Mischen des durch die Fluidleitung 13 strömenden Frittierfetts, das durch die Heizeinrichtung 7 auf Temperaturen über 170°C erhitzt wurde, und des durch die Rohrleitung 13' strömenden Frittierfetts ausgebildet, so dass auf diese Weise im Einlassbereich 3.1 bzw. in der Kammer $K_1$ des Frittierbehälters 3 eine dynamisch regelbare Energiezufuhr erzielbar ist.

Die Steuerungseinrichtung 6 ist wie bereits in Fig. 3 aus Gründen der Übersichtlichkeit nicht explizit dargestellt; sie ist im Rahmen der Ausgestaltung der Fig. 4 vorzugsweise zusätzlich zum Ansteuern der Mischvorrichtung 14 ausgebildet und entsprechend mit dieser verbunden.

Durch das Positionieren einer möglichst kleinen Menge an Frittiergut (Portionsgrößen von ca. 100 - 200 g; vergleiche das oben angegebene Berechnungsbeispiel) wird erfindungsgemäß gewährleistet, dass das in Strömung versetzte Frittierfett das Frittiergut besser durchströmen kann als bei vorbekannten herkömmlichen Frittierverfahren, bei denen verhältnismäßig große Mengen an Frittiergut während eines Backvorgangs frittiert werden. Durch das Einbringen einer nur geringen Menge an Frittiergut einer bestimmten Temperatur in erhitztes Frittierfett einer anderen, höheren Temperatur verringert sich aufgrund der vorstehend detailliert erläuterten formelmäßigen Zusammenhänge die Abkühlung $\Delta\vartheta$ des Frittierfetts. Dies bedingt zusammen mit der vorgeschlagenen erhöhten Einlasstemperatur $\vartheta_A$ für das Frittierfett eine bessere Verkrustung der Poren an der Oberfläche des Frittierguts zu Beginn des Frittiervorgangs im Vergleich zu herkömmlichen Frittierprozessen. Dadurch wird in der Folge eine Diffusion von Fettmolekülen in den Kernbereich des Frittiergutes verringert, so dass im Ergebnis das Frittiergut einen entsprechend geringeren Fettanteil aufweist. Dabei ist nicht die absolute Masse des Frittierguts entscheidend, sondern die zum Erhitzen des Frittierguts benötigte Energiemenge. Ist das Frittiergut stark wasserhaltig, insbesondere mit einer relativ großen Oberfläche im Verhältnis zum Volumen (z.B. geschnittenes Frittiergut), wird vor allem zu Beginn des Frittiervorgangs dem Frittierfett sehr schnell Energie entzogen, und es sind entsprechend geringere Mengen einzusetzen. Handelt es sich beim Frittiergut aber um komplette Stücke, wie z.B. Hähnchenschenkel oder Teigwaren mit relativ geringem Wasseranteil, wird sich der Energiebedarf zum Erhitzen über einen größeren Zeitraum verteilen und/oder ist insgesamt nicht so hoch, so dass auch größere Mengen einsetzbar sind.

Darüber hinaus wird durch die erfindungsgemäss erreichte schnelle und gleichmäßige Erwärmung des Frittiergutes eine Verkürzung der gesamten Frittierdauer erzielt. Dadurch und insbesondere auch aufgrund des erfindungsgemäß vorgesehenen Temperaturprofils wird die Bildung unerwünschten, weil gesundheitsschädlichen Acrylamids auf ein prinzipiell nicht vermeidbares Mindestmaß reduziert.

**Bezugszeichenliste**

| | |
|---|---|
| 1 | Frittiervorrichtung |
| 2 | Frittiergut |
| 3 | Frittierbehälter |
| 3a | Behälterwand |
| 3.1 | Einlass |
| 3.2 | Auslass |
| 3.3 | Heizkammer |
| 3.3a | Schottwand |
| 3.4a-c | Trennwand |
| 4 | Wärmeüberträgerfluid, Frittierfett |
| 5 | Pumpe |
| 6 | Steuerungseinrichtung |
| 7, 7' | Heizeinrichtung |
| 8 | Filtereinrichtung |
| 8.1 | Filterelement |
| 9, 9' | Zuführeinrichtung |
| 9.1, 9.1' | Behälter |
| 9.2, 9.2' | Pumpmittel |
| 9.3, 9.3' | Zuleitung |
| 10 | Ablasseinrichtung |
| 11, 11', 11'', 11$^{(3)}$ | Aufnahmemittel, Frittierkorb |
| 11.1, 11.1' 11.1'', 11.1$^{(3)}$ | undurchlässige Wandung |
| 12 | Tank |
| 13, 13' | Fluidleitung |
| 14 | Mischeinrichtung, Drei-Wege-Ventil |
| A | Achse |
| h | Erstreckung |
| $K_1, K_2, K_3, K_4$ | Frittierkammer |
| L | Länge |
| $P, P_1, P_2$ | Pegel |
| R | Fluidströmung |
| S | Fluidströmung |
| Si, $S_2, S_3$ | Temperatursensor |
| $S_4$ | Qualitätssensor |
| x | (Erstreckungs-)Koordinate |
| $\vartheta$ | Temperatur |
| $\Delta\vartheta$ | Temperatur-Änderung |

**Patentansprüche**

1. Verfahren zum Frittieren von Frittiergut in einem Wärmeüberträgerfluid , insbesondere Fett, **dadurch gekennzeichnet, dass** das Frittiergut bei sukzessive abnehmender Temperatur des Wärmeüberträgerfluids gegart wird.

2. Verfahren nach Anspruch 1, **dadurch gekennzeichnet, dass** die Temperatur zu Beginn des Garvorgangs bei > 170°C, vorzugsweise 185°C, liegt.

3. Verfahren nach Anspruch 1 oder 2, **dadurch gekennzeichnet, dass** die Temperatur am Ende des Garvorgangs bei < 170°C liegt.

4. Verfahren nach einem der Ansprüche 1 bis 3, **dadurch gekennzeichnet, dass** das Frittiergut ausgehend von einer ersten Frittierkammer sukzessive eine Anzahl von Frittierkammern durchläuft, in denen jeweils eine gegenüber der vorangehenden Frittierkammer verminderte Temperatur des Wärmeüberträgerfluids herrscht.

**5.** Verfahren nach einem der Ansprüche 1 bis 4, **dadurch gekennzeichnet, dass** das Wärmeüberträgerfluid durch ein Pumpmittel in einem Kreislauf gefördert wird.

**6.** Verfahren nach Anspruch 4 und 5, **dadurch gekennzeichnet, dass** das Wärmeüberträgerfluid durch eine Heizeinrichtung erwärmt und anschließend der ersten Frittierkammer zugeführt wird.

**7.** Verfahren nach Anspruch 6, **dadurch gekennzeichnet, dass** die Erwärmung des Wärmeüberträgerfluids in Abhängigkeit von Parametern des in den Frittierkammern befindlichen Frittiergutes erfolgt, insbesondere einer Masse und/oder einem Wassergehalt des Frittiergutes in der ersten Frittierkammer.

**8.** Verfahren nach Anspruch 6 oder 7, **dadurch gekennzeichnet, dass** die Erwärmung des Wärmeüberträgerfluids derart erfolgt, dass in den auf die erste Frittierkammer folgenden Frittierkammern eine Temperatur des Wärmeüberträgerfluids von im Wesentlichen 170°C und darunter herrscht.

**9.** Verfahren nach einem der Ansprüche 5 bis 8, **dadurch gekennzeichnet, dass** das Wärmeüberträgerfluid nach Durchströmen der Frittierkammern gefiltert wird.

**10.** Verfahren nach einem der Ansprüche 1 bis 9, **dadurch gekennzeichnet, dass** Qualitätsmerkmale des Wärmeüberträgerfluids, wie Strahlungsabsorptionsverhalten, Viskosität oder dergleichen, kontinuierlich sensorisch erfasst werden.

**11.** Verfahren nach Anspruch 10, **dadurch gekennzeichnet, dass** in Abhängigkeit von den Sensormesswerten entweder das Verfahren fortgesetzt wird; das Wärmeüberträgerfluid ganz oder teilweise ausgetauscht wird; das Wärmeüberträgerfluid mit Zusatzstoffen versehen wird; oder das Verfahren unterbrochen wird.

**12.** Vorrichtung zum Frittieren von Frittiergut in einem Wärmeüberträgerfluid , insbesondere Fett, das mittels einer Pumpe in einem Kreislauf geführt und in einem Frittierbehälter mit dem Frittiergut in Kontakt gebracht ist, **dadurch gekennzeichnet, dass** zum Garen des Frittiergutes (2) eine Abfolge von Frittierkammern ($K_1$, $K_2$, $K_3$, $K_4$) mit unterschiedlichen Temperaturen ($\vartheta$) des Wärmeüberträgerfluids (4) vorgesehen ist.

**13.** Vorrichtung nach Anspruch 12, **dadurch gekennzeichnet, dass** die Frittierkammern ($K_1$, $K_2$, $K_3$, $K_4$) in Reihe hintereinander angeordnet sind.

**14.** Vorrichtung nach Anspruch 12 oder 13, **dadurch gekennzeichnet, dass** das Frittiergut (2) aus einer Frittierkammer ($K_1$, $K_2$, $K_3$) in eine jeweils benachbarte Frittierkammer ($K_2$, $K_3$, $K_4$) mit niedrigerer Temperatur des Wärmeübeträgerfluids (4) überführbar ist.

**15.** Vorrichtung nach einem der Ansprüche 12 bis 14, **dadurch gekennzeichnet, dass** die Frittierkammern ($K_1$-$K_4$) durch Aufnahmemittel (11-11[(3)]) für das Frittiergut (2) gebildet sind.

**16.** Vorrichtung nach Anspruch 15, **dadurch gekennzeichnet, dass** die Aufnahmemittel (11-11[(3)]) korbartig ausgebildet sind.

**17.** Vorrichtung nach Anspruch 15 oder 16, **dadurch gekennzeichnet, dass** die Aufnahmemittel (11-11[(3)]) wenigstens eine für eine Strömung (S) des Wärmeüberträgerfluids (4) im Wesentlichen undurchlässige Wandung (11.1, 11.1', 11.1", 11.1[(3)]) aufweisen.

**18.** Vorrichtung nach einem der Ansprüche 15 bis 17, **dadurch gekennzeichnet, dass** zwischen den Aufnahmemitteln (11-11[(3)]) jeweils eine für eine Strömung (S) des Wärmeüberträgerfluids (4) im Wesentlichen undurchlässige Wand (3.4a-c) in dem Frittierbehälter (3) angeordnet ist.

**19.** Vorrichtung nach Anspruch 18, **dadurch gekennzeichnet, dass** eine vertikale Erstreckung (h) der Wand (3.4a-c) unterhalb eines Pegels (P) des Wärmeüberträgerfluids (4) endet.

**20.** Vorrichtung nach einem der Ansprüche 17 bis 19, **dadurch gekennzeichnet, dass** eine Strömung (S) des Wärmeüberträgerfluids (4) durch den Frittierbehälter (3) durch die Wand (3.4a-c)/Wandung (11.1-11.1[(3)]) in ihrer Richtung beeinflusst ist.

**21.** Vorrichtung nach einem der Ansprüche 15 bis 19, **dadurch gekennzeichnet, dass** die Aufnahmemittel (11-11$^{(3)}$) zum Überführen des Frittiergutes (2) kippbar gelagert sind.

**22.** Vorrichtung nach Anspruch 21, **dadurch gekennzeichnet, dass** die Aufnahmemittel (11-11$^{(3)}$) zum Kippen um eine Achse (A) drehbar gelagert sind.

**23.** Vorrichtung nach einem der Ansprüche 13 bis 22, **dadurch gekennzeichnet, dass** der Frittierbehälter (3) im Bereich der Frittierkammer (K$_1$) einen Einlass (3.1) und im Bereich der letzten Frittierkammer (K$_4$) einen Auslass (3.2) für das Wärmeüberträgerfluid (4) aufweist.

**24.** Vorrichtung nach einem der Ansprüche 12 bis 23, **dadurch gekennzeichnet, dass** zumindest im Einlassbereich (3.1) des Frittierbehälters (3) ein Temperatursensor (S$_1$) vorgesehen ist.

**25.** Vorrichtung nach Anspruch 24, **dadurch gekennzeichnet, dass** eine Einlasstemperatur ($\vartheta_A$) des Wärmeüberträgerfluids (4) in Abhängigkeit zumindest von einem Messsignal des Temperatursensors (S$_1$) regelbar ist.

**26.** Vorrichtung nach einem der Ansprüche 12 bis 25, **gekennzeichnet durch** eine zusätzliche Heizeinrichtung (7') zur Feinregulierung der Einlasstemperatur ($\vartheta_A$).

**27.** Vorrichtung nach einem der Ansprüche 12 bis 26, **gekennzeichnet durch** eine Mischeinrichtung (14) zum Mischen von Mengen des Wärmeüberträgerfluids (4) mit unterschiedlicher Temperatur zur Feinregulierung der Einlasstemperatur ($\vartheta_A$).

**28.** Vorrichtung nach einem der Ansprüche 12 bis 27, **gekennzeichnet durch** ein Reservoir (12) für das Wärmeüberträgerfluid (4) aus dem Frittierbehälter (3).

**29.** Vorrichtung nach einem der Ansprüche 12 bis 28, **gekennzeichnet durch** eine Sensoreinrichtung (S$_4$) zum Bestimmen von Qualitätsmerkmalen des Wärmeüberträgerfluids (4), wie Strahlungsabsorption, Viskosität oder dergleichen.

**30.** Vorrichtung nach Anspruch 29, **dadurch gekennzeichnet, dass** die Sensoreinrichtung (S$_4$) in dem Reservoir (12) angeordnet ist.

**31.** Vorrichtung nach einem der Ansprüche 12 bis 30, **gekennzeichnet durch** eine Filtereinrichtung (8) für das Wärmeüberträgerfluid (4).

**32.** Vorrichtung nach einem der Ansprüche 12 bis 31, **gekennzeichnet durch** Zuführeinrichtungen (9, 9') für ein Austausch-Wärmeüberträgerfluid und/oder Zusatzstoffe.

**33.** Vorrichtung nach Anspruch 32, **dadurch gekennzeichnet, dass** die Zuführeinrichtungen (9, 9') jeweils einen Behälter (9.1, 9.1') für das zuzuführende Medium sowie ein Pumpmittel (9.2, 9.2') aufweisen.

**Fig. 1**

**Fig. 2**

EP 1 552 754 A1

Fig. 3

**Fig. 4**

# EP 1 552 754 A1

**Europäisches Patentamt**

## EUROPÄISCHER RECHERCHENBERICHT

Nummer der Anmeldung

EP 05 00 0190

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 3 885 056 A (SMITH ET AL) 20. Mai 1975 (1975-05-20) * Spalte 7, Zeile 61 - Spalte 8, Zeile 44; Ansprüche; Abbildung 1 * ----- | 1-3,5, 9-11 | A23L1/01 A47J37/12 |
| X | US 4 863 750 A (PAWLAK ET AL) 5. September 1989 (1989-09-05) * Ansprüche; Abbildung 1 * ----- | 1,5,9-11 | |
| X | US 2 840 436 A (MASON JESSE B) 24. Juni 1958 (1958-06-24) * Spalte 1, Zeile 15 - Zeile 60; Ansprüche; Abbildungen * ----- | 12-20, 23-33 | |
| X | US 5 776 530 A (DAVIS ET AL) 7. Juli 1998 (1998-07-07) * Spalte 2, Zeile 15 - Spalte 3, Zeile 5; Ansprüche 1,7; Abbildungen 1-5 * ----- | 12-20, 23-33 | |
| X | US 3 800 692 A (SIMENS R,US) 2. April 1974 (1974-04-02) * Spalte 7, Zeile 38 - Spalte 8, Zeile 15; Anspruch 1; Abbildungen 1,12 * ----- | 12-20, 23-33 | RECHERCHIERTE SACHGEBIETE (Int.Cl.7) A23L A47J |

Der vorliegende Recherchenbericht wurde für alle Patentansprüche erstellt

| Recherchenort | Abschlußdatum der Recherche | Prüfer |
|---|---|---|
| München | 21. April 2005 | Smeets, D |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
............................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 05 00 0190

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-04-2005

| Im Recherchenbericht angeführtes Patentdokument | Datum der Veröffentlichung | Mitglied(er) der Patentfamilie | Datum der Veröffentlichung |
|---|---|---|---|
| US 3885056 A | 20-05-1975 | US 3731614 A | 08-05-1973 |
| US 4863750 A | 05-09-1989 | KEINE | |
| US 2840436 A | 24-06-1958 | KEINE | |
| US 5776530 A | 07-07-1998 | US 5617777 A | 08-04-1997 |
| US 3800692 A | 02-04-1974 | KEINE | |

Für nähere Einzelheiten zu diesem Anhang : siehe Amtsblatt des Europäischen Patentamts, Nr.12/82

EPO FORM P0461